# EUROPEAN PATENT APPLICATION

(11) **EP 4 773 526 A1**
(43) Date of publication of application: **08.07.2026**
(21) Application number: 23947860.5
(22) Date of filing: 04.08.2023
(51) Int. Cl.: H04J 3/06

(54) **COMMUNICATION METHOD, APPARATUS, SYSTEM AND VEHICLE**

(71) Applicant: Yinwang Intelligent Technologies Co., Ltd., Shenzhen, Guangdong 518110 (CN)
(72) Inventor: ZHANG, Xingxin, Shenzhen, Guangdong 518129 (CN); WANG, Xuehuan, Shenzhen, Guangdong 518129 (CN)
(74) Representative: Gill Jennings & Every LLP
(86) International application number: PCT/CN2023/111299
(87) International publication number: WO 2025/030273

(57) **Abstract**

A communication method, apparatus, and system, and a vehicle are provided. The communication method may be applied to an audio system. The audio system includes at least a primary node, a first secondary node, and a second secondary node. The first secondary node receives a first discovery frame from the primary node, where the first discovery frame carries first synchronization information, and the first synchronization information is for clock synchronization. After receiving the first discovery frame, the first secondary node sends a second discovery frame to the second secondary node, where the second discovery frame carries second synchronization information, and the second synchronization information is for clock synchronization. The first secondary node is in an undiscovered state. Technical solutions of this application help improve efficiency of clock synchronization between a primary node and a plurality of secondary nodes, and accelerate a speed of discovering the secondary nodes by the primary node.

## Description

### TECHNICAL FIELD

This application relates to the field of audio transmission, and more specifically, to a communication method, apparatus, and system, and a vehicle.

### BACKGROUND

A wired audio system of a vehicle usually includes one audio control device and a plurality of audio devices. The audio control device and the plurality of audio devices are typically connected in a daisy chain networking manner. The audio control device sends, through an audio bus, audio data that needs to be played to one or more audio devices for playing. The audio devices transmit collected audio data to the audio control device through the audio bus.

To implement audio data transmission between the audio control device and the audio devices, before data transmission, secondary nodes in the plurality of audio devices need to be clock-synchronized with a primary node in the audio control device, and be discovered by the primary node to access an audio bus system. When the audio control device and the plurality of audio devices are connected in the daisy chain networking manner, how to quickly discover the secondary node in the audio bus system becomes an urgent problem to be resolved.

### SUMMARY

This application provides a communication method, apparatus, and system, and a vehicle, to improve efficiency of clock synchronization between a primary node and a plurality of secondary nodes, and accelerate a speed of discovering a secondary node by the primary node.

According to a first aspect, a communication method is provided, where the method is applied to a first secondary node, and the method includes: receiving a first discovery frame, where the first discovery frame carries first synchronization information, and the first synchronization information is for clock synchronization; and sending a second discovery frame after the first discovery frame is received, where the second discovery frame carries second synchronization information, and the second synchronization information is for clock synchronization, where the first secondary node is in an undiscovered state.

For example, the receiving the first discovery frame includes: directly receiving the first discovery frame from a primary node, or receiving, by using one or more secondary nodes, the first discovery frame sent by the primary node. The sending the second discovery frame includes: directly sending the second discovery frame to the second secondary node, or sending the second discovery frame to the second secondary node by using one or more secondary nodes.

The second secondary node is connected to the primary node at least via the first secondary node. The second secondary node may be a tail secondary node in a daisy chain networking including the primary node and a plurality of secondary nodes including the first secondary node and the second secondary node, or may be any secondary node between the first secondary node and the tail secondary node. In this application, in a link including the primary node and the plurality of secondary nodes, a link on which a secondary node transmits information to the primary node or toward the primary node is an uplink, and a link on which the secondary node transmits information to a secondary node away from the primary node is a downlink. In addition, a link on which the primary node transmits information to a secondary node is a downlink. For example, the first secondary node is located on an uplink of the second secondary node, the second secondary node is located on a downlink of the first secondary node, and the first secondary node and the second secondary node are located on a downlink of the primary node.

In this application, a process of discovering the secondary node includes a process in which the primary node detects the secondary node and assigns an identity (identity, ID) to the secondary node. The identity can be used for control and interrupt reporting. After a secondary node is discovered, the primary node may send data to the node or receive data from the secondary node.

For example, that the first secondary node is in an undiscovered state may include: a state in which no identity is assigned to the first secondary node; or a state in which the first secondary node sets an unassigned identity carried in a discovery frame as an identity of the first secondary node, and after sending a response frame to the primary node. That the first secondary node is in a discovered state may include a state when and after the first secondary node receives the discovery frame that carries an identity different from the identity of the first secondary node. That the first secondary node is in the undiscovered state may also be understood as that the first secondary node in the undiscovered state has at least one of the following features: No identity is assigned to the first secondary node; or the first secondary node sets an unassigned identity carried in a discovery frame as the identity of the first secondary node, and after sending a response frame to the primary node, the first secondary node does not receive a discovery frame that carries the identity different from the identity of the first secondary node. That the first secondary node is in a discovered state may also be understood as that the first secondary node in a discovered state may include the following feature: receiving the discovery frame that carries an identity different from the identity of the first secondary node.

For example, the sending the second discovery frame after the first discovery frame is received includes any one of the following: sending the second discovery frame before sending the response frame to the primary node based on the first discovery frame; sending the second discovery frame upon sending the response frame to the primary node based on the first discovery frame; or sending the second discovery frame after sending the response frame to the primary node based on the first discovery frame, but before the first secondary node receives a discovery frame that is sent by the primary node and that carries another identity that is not assigned to a secondary node.

The sending the response frame to the primary node based on the first discovery frame may include: setting, by the first secondary node, the identity carried in the first discovery frame as the identity of the first secondary node, and sending the response frame to the primary node; or setting, by the first secondary node, the identity carried in the first discovery frame as the identity of the first secondary node, completing clock synchronization by the first secondary node based on the first synchronization information, and sending the response frame to the primary node.

In the foregoing technical solution, after receiving the first discovery frame sent by the primary node, the first secondary node in an undiscovered state sends, to the secondary node located on the downlink, the second discovery frame that carries the synchronization information. This helps perform clock synchronization between the secondary node on the downlink and the primary node, to improve a speed of discovering the secondary node.

With reference to the first aspect, in some implementations of the first aspect, the first discovery frame and the second discovery frame further carry a first identity field.

With reference to the first aspect, in some implementations of the first aspect, a value of the first identity field of the first discovery frame is a non-specific value, and a value of the first identity field of the second discovery frame is a specific value.

For example, **the non-specific value may include an identity that is not assigned to the secondary node,** or may include an identity that is to be assigned or already assigned to the first secondary node. The specific value may include a character string, a sequence, or the like that cannot be assigned to the secondary node as the identity. The specific value may be pre-determined among a plurality of secondary nodes including the first secondary node and the second secondary node and the primary node.

In the foregoing technical solution, the identity field of the second discovery frame is set as a specific value, so that a probability that a secondary node located on a downlink of the first secondary node incorrectly feeds back a response frame based on the second discovery frame can be reduced. In addition, by setting the identity field of the second discovery frame as the specific value, the secondary node located on the downlink of the first secondary node may be further indicated that the second discovery frame is only for clock synchronization.

With reference to the first aspect, in some implementations of the first aspect, the method further includes: setting the non-specific value as a node identity of the first secondary node; and sending a first response frame.

For example, the setting the non-specific value as the node identity of the first secondary node may be understood as follows: The first secondary node uses the non-specific value as the identity of the first secondary node. Further, the first secondary node determines, based on the identity, whether a subsequently received discovery frame is only for clock synchronization, or is for both clock synchronization and assignment of an identity to another secondary node.

With reference to the first aspect, in some implementations of the first aspect, the method further includes: receiving a third discovery frame, where the third discovery frame carries a second identity field, and a value of the second identity field is a specific value; and sending the third discovery frame.

For example, the second identity field and the first identity field may be a same field, and the specific value and the above specific value may be a same specific value.

It should be noted that the third discovery frame carries synchronization information for clock synchronization, and the first secondary node receives the third discovery frame, and performs clock synchronization based on the synchronization information in the third discovery frame.

It should be further noted that, in this implementation, the first secondary node is any secondary node located between a secondary node directly connected to the primary node and the tail secondary node.

In the foregoing technical solution, when determining that the value of the first identity field is the specific value, the first secondary node may determine that the third discovery frame is only for clock synchronization, and forward the third discovery frame to a secondary node on a downlink, and does not feed back the response frame to the primary node based on the third discovery frame.

With reference to the first aspect, in some implementations of the first aspect, the first discovery frame and the second discovery frame further carry a state field, and the state field indicates whether a first identity carried in the first identity field is assigned; and when a value of the state field is a first value, the state field indicates that the first identity is not assigned; or when a value of the state field is a second value, the state field indicates that the first identity is assigned.

For example, the first identity may include the foregoing non-specific value.

With reference to the first aspect, in some implementations of the first aspect, the value of the state field of the first discovery frame is the first value, and the value of the state field of the second discovery frame is the second value.

For example, the state field may be a field with a length of 1 bit, and the value of the field may be "0" or "1". The first value may be "0", and the second value may be "1".

In the foregoing technical solution, the second value of the state field indicates, in the second discovery frame, that the first identity carried in the second discovery frame is assigned, so that a probability that the secondary node located on the downlink of the first secondary node repeatedly sets the first identity as the identity of the secondary node can be reduced, to reduce a probability that the secondary node located on the downlink of the first secondary node incorrectly feeds back the response frame based on the second discovery frame, and avoid duplicate secondary node identities.

With reference to the first aspect, in some implementations of the first aspect, the method further includes: setting a value of the first identity field as a node identity of the first secondary node; and sending a second response frame.

In some possible implementations, the second response frame and the first response frame may be a same response frame.

With reference to the first aspect, in some implementations of the first aspect, the first discovery frame and the second discovery frame further carry a first check field, and the first check field is at least used to check the first identity field and the state field.

For example, the first check field may include check information such as cyclic redundancy check (cyclic redundancy check, CRC) and Hamming coding.

In the foregoing technical solution, the first identity field and the state field are protected by using the first check field, so that a probability that the secondary node incorrectly detects the first identity field and the state field can be reduced.

With reference to the first aspect, in some implementations of the first aspect, the first discovery frame and the second discovery frame further carry a second check field, and the second check field is at least used to check the first identity field.

For example, the second check field may include check information such as CRC, Hamming coding, and first identity repetition.

In the foregoing technical solution, the first identity field is protected by using the second check field, so that a probability that the secondary node incorrectly detects the first identity field can be reduced.

With reference to the first aspect, in some implementations of the first aspect, the method further includes: receiving a fourth discovery frame, where the fourth discovery frame carries the first identity field and the state field, and the value of the state field is the second value; and sending the fourth discovery frame.

For example, the first identity field may carry the first identity, or the value of the first identity field may be a non-specific value.

It should be noted that the fourth discovery frame carries the synchronization information for clock synchronization, and the first secondary node receives the fourth discovery frame, and performs clock synchronization based on the synchronization information in the fourth discovery frame.

It should be further noted that, in this implementation, the first secondary node is any secondary node located between a secondary node directly connected to the primary node and the tail secondary node.

In the foregoing technical solution, when determining that the value of the state field is the second value, the first secondary node may determine that the fourth discovery frame is only for clock synchronization, and forward the fourth discovery frame to a secondary node on a downlink, and does not feed back the response frame to the primary node based on the fourth discovery frame.

With reference to the first aspect, in some implementations of the first aspect, the first discovery frame carries an information field, the information field includes a third identity field, and the method further includes: setting a value of the third identity field as a node identity of the first secondary node; and sending a third response frame.

For example, the third identity field and the first identity field may be a same field. The value of the third identity field may include the foregoing non-specific value, or may include the foregoing first identity.

For example, the third response frame, the first response frame, and the second response frame may be a same response frame.

With reference to the first aspect, in some implementations of the first aspect, the second discovery frame carries only the second synchronization information, and a bit length of the second synchronization information is the same as a bit length of the first synchronization information; or the second discovery frame carries the second synchronization information and the third synchronization information, a bit length of the second synchronization information is the same as a bit length of the first synchronization information, and a bit length of the third synchronization information is the same as a bit length of an information field.

For example, the second synchronization information may include other information except information used to discover the secondary node. For example, the second synchronization information may include control information related to non-service data. Related information used to discover the secondary node may include information carried in the third identity field.

For example, information content carried in the second synchronization information is the same as information carried in the first synchronization information, and information content carried in the third synchronization information is the same as information carried in the first synchronization information.

In the foregoing technical solution, the second discovery frame includes only the synchronization information, and the synchronization information overwrites the original information field. This helps keep a frame structure of the second discovery frame consistent with a frame structure of the first discovery frame, to facilitate discovery frame management. In addition, increasing a bit length of information for clock synchronization improves clock synchronization performance.

With reference to the first aspect, in some implementations of the first aspect, the first synchronization information and the second synchronization information include an information indication field, and the information indication field indicates whether the first synchronization information or the second synchronization information carries an information field; and when a value of the information indication field is a third value, the information indication field indicates that the information field is carried; or when a value of the information indication field is a fourth value, the information indication field indicates that the information field is not carried.

For example, the information indication field may be a field with a length of 1 bit, and the value of the field may be "0" or "1". The third value may be "0", and the fourth value may be "1".

With reference to the first aspect, in some implementations of the first aspect, the value of the information indication field in the first discovery frame is the third value, and the value of the information indication field in the second discovery frame is the fourth value.

In the foregoing technical solution, the fourth value of the information indication field indicates the second discovery frame not to carry the information field, so as to reduce a likelihood of a secondary node located on a downlink of the first secondary node incorrectly feeding back the response frame based on the second discovery frame.

With reference to the first aspect, in some implementations of the first aspect, the first synchronization information and the second synchronization information further include a third check field, and the third check field is at least used to check an information indication field.

For example, the third check field may include check information such as CRC and Hamming coding.

In the foregoing technical solution, by using the third check field, a probability of incorrect feedback of the first discovery frame or the second discovery frame caused by an error that occurs when the secondary node detects the check information indication field can be reduced.

With reference to the first aspect, in some implementations of the first aspect, the method further includes: receiving a fifth discovery frame, where the fifth discovery frame carries at least synchronization information, and the synchronization information is for clock synchronization; and sending the fifth discovery frame.

For example, the first secondary node receives the fifth discovery frame, and performs clock synchronization based on the synchronization information in the fifth discovery frame.

It should be noted that, in this implementation, the first secondary node is any secondary node located between a secondary node directly connected to the primary node and the tail secondary node.

With reference to the first aspect, in some implementations of the first aspect, the fifth discovery frame is the same as the second discovery frame.

That the fifth discovery frame is the same as the second discovery frame includes: a frame structure and carried information content of the fifth discovery frame are the same as a frame structure and carried information content of the second discovery frame.

With reference to the first aspect, in some implementations of the first aspect, the second synchronization information is the same as the first synchronization information.

That the second synchronization information is the same as the first synchronization information includes: information content of the second synchronization information is the same as information content of the first synchronization information.

With reference to the first aspect, in some implementations of the first aspect, the method further includes: receiving a sixth discovery frame, where the third discovery frame carries the second identity that is not assigned to the secondary node; and sending the sixth discovery frame when the second identity is different from the identity of the first secondary node.

According to a second aspect, a communication apparatus is provided, where the apparatus is used in a first secondary node, and the apparatus includes: a receiving unit, configured to receive a first discovery frame, where the first discovery frame carries first synchronization information, and the first synchronization information is for clock synchronization; and a sending unit, configured to send a second discovery frame after the receiving unit receives the first discovery frame, where the second discovery frame carries second synchronization information, and the second synchronization information is for clock synchronization, where the first secondary node is in an undiscovered state.

With reference to the second aspect, in some implementations of the second aspect, the first discovery frame and the second discovery frame further carry a first identity field.

With reference to the second aspect, in some implementations of the second aspect, a value of the first identity field of the first discovery frame is a non-specific value, and a value of the first identity field of the second discovery frame is a specific value.

With reference to the second aspect, in some implementations of the second aspect, the apparatus further includes a first processing unit, configured to set the non-specific value as a node identity of the first secondary node; and the sending unit is further configured to send a first response frame.

With reference to the second aspect, in some implementations of the second aspect, the receiving unit is further configured to receive a third discovery frame, where the third discovery frame carries a second identity field, and a value of the second identity field is a specific value; and the sending unit is further configured to send the third discovery frame.

With reference to the second aspect, in some implementations of the second aspect, the first discovery frame and the second discovery frame further carry a state field, and the state field indicates whether a first identity carried in the first identity field is assigned; and when a value of the state field is a first value, the state field indicates that the first identity is not assigned; or when a value of the state field is a second value, the state field indicates that the first identity is assigned.

With reference to the second aspect, in some implementations of the second aspect, the value of the state field of the first discovery frame is the first value, and the value of the state field of the second discovery frame is the second value.

With reference to the second aspect, in some implementations of the second aspect, the apparatus further includes a second processing unit, configured to set a value of the first identity field as a node identity of the first secondary node; and the sending unit is further configured to send a second response frame.

With reference to the second aspect, in some implementations of the second aspect, the first discovery frame and the second discovery frame further carry a first check field, and the first check field is at least used to check the first identity field and the state field.

With reference to the second aspect, in some implementations of the second aspect, the first discovery frame and the second discovery frame further carry a second check field, and the second check field is at least used to check the first identity field.

With reference to the second aspect, in some implementations of the second aspect, the receiving unit is further configured to receive a fourth discovery frame, where the fourth discovery frame carries the first identity field and the state field, and the value of the state field is the second value; and the sending unit is further configured to send the fourth discovery frame.

With reference to the second aspect, in some implementations of the second aspect, the first discovery frame carries an information field, the information field includes a third identity field, and the apparatus further includes a third processing unit, configured to set a value of the third identity field as a node identity of the first secondary node; and the sending unit is configured to send a third response frame.

With reference to the second aspect, in some implementations of the second aspect, the second discovery frame carries only the second synchronization information, and a bit length of the second synchronization information is the same as a bit length of the first synchronization information; or the second discovery frame carries the second synchronization information and the third synchronization information, a bit length of the second synchronization information is the same as a bit length of the first synchronization information, and a bit length of the third synchronization information is the same as a bit length of the information field.

With reference to the second aspect, in some implementations of the second aspect, the first synchronization information and the second synchronization information include an information indication field, and the information indication field indicates whether the first synchronization information or the second synchronization information carries the information field; and when a value of the information indication field is a third value, the information indication field indicates that the information field is carried; or when a value of the information indication field is a fourth value, the information indication field indicates that the information field is not carried.

With reference to the second aspect, in some implementations of the second aspect, the value of the information indication field in the first discovery frame is the third value, and the value of the information indication field in the second discovery frame is the fourth value.

With reference to the second aspect, in some implementations of the second aspect, the first synchronization information and the second synchronization information further include a third check field, and the third check field is at least used to check the information indication field.

With reference to the second aspect, in some implementations of the second aspect, the receiving unit is further configured to receive a fifth discovery frame, where the fifth discovery frame carries at least synchronization information, and the synchronization information is for clock synchronization; and the sending unit is further configured to send the fifth discovery frame.

With reference to the second aspect, in some implementations of the second aspect, the fifth discovery frame is the same as the second discovery frame.

With reference to the second aspect, in some implementations of the second aspect, the second synchronization information is the same as the first synchronization information.

According to a third aspect, a communication apparatus is provided. The apparatus includes: a memory, configured to store a computer program; and a processor, configured to execute the computer program stored in the memory, so that the apparatus performs the method according to any possible implementation of the first aspect.

According to a fourth aspect, a communication system is provided. The system includes the apparatus according to any one of the possible implementations of the second aspect or the third aspect, a primary node, and a second secondary node.

According to a fifth aspect, a vehicle is provided. The vehicle includes the apparatus according to any one of the possible implementations of the second aspect or the third aspect; or the vehicle includes the system according to any one of the possible implementations of the fourth aspect.

According to a sixth aspect, a computer program product is provided, where the computer program product includes computer program code, and when the computer program code is run on a computer, the computer is enabled to perform the method according to any one of the possible implementations of the first aspect.

It should be noted that all or a part of the computer program code may be stored in a first storage medium, and the first storage medium may be encapsulated together with a processor, or may be encapsulated separately from the processor.

According to a seventh aspect, a computer-readable medium is provided, where the computer-readable medium stores instructions, and when the instructions are executed by a processor, the processor is enabled to implement the method according to any one of the possible implementations of the first aspect.

According to an eighth aspect, a chip is provided, where the chip includes a circuit, and the circuit is configured to perform the method according to any one of the possible implementations of the first aspect.

### BRIEF DESCRIPTION OF DRAWINGS

FIG. 1 is a block diagram of an audio system according to an embodiment of this application;
FIG. 2 is another block diagram of an audio system according to an embodiment of this application;
FIG. 3 is a block diagram of a vehicle according to an embodiment of this application;
FIG. 4A and FIG. 4B are a flowchart of a communication method according to an embodiment of this application;
FIG. 5 is a block diagram of a secondary node discovery frame according to an embodiment of this application;
FIG. 6 is another block diagram of a secondary node discovery frame according to an embodiment of this application;
FIG. 7 is still another block diagram of a secondary node discovery frame according to an embodiment of this application;
FIG. 8 is yet another block diagram of a secondary node discovery frame according to an embodiment of this application;
FIG. 9A, FIG. 9B, and FIG. 9C are still yet another block diagram of a secondary node discovery frame according to an embodiment of this application;
FIG. 10A, FIG. 10B, and FIG. 10C are still yet another block diagram of a secondary node discovery frame according to an embodiment of this application;
FIG. 11A and FIG. 11B are another flowchart of a communication method according to an embodiment of this application;
FIG. 12A and FIG. 12B are still another flowchart of a communication method according to an embodiment of this application;
FIG. 13 is still yet another flowchart of a communication method according to an embodiment of this application;
FIG. 14 is a block diagram of a communication apparatus according to an embodiment of this application; and
FIG. 15 is another block diagram of a communication apparatus according to an embodiment of this application.

### DESCRIPTION OF EMBODIMENTS

The following describes technical solutions of this application with reference to accompanying drawings.

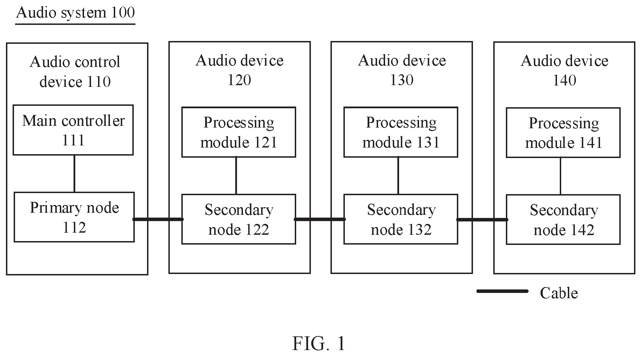

FIG. 1 is a diagram of an audio system according to an embodiment of this application. As shown in FIG. 1, the audio system 100 includes an audio control device 110, an audio device 120, an audio device 130, and an audio device 140. The audio control device 110 includes a main controller 111 and a primary node 112. The audio device 120 includes a processing module 121 and a secondary node 122. The audio device 130 includes a processing module 131 and a secondary node 132. The audio device 140 includes a processing module 141 and a secondary node 142. The primary node 112 is connected to the secondary node 122, the secondary node 132, and the secondary node 142 through a cable in a daisy chain networking manner. The secondary node 122, the secondary node 132, and the secondary node 142 may be apparatuses such as processors or transmission chips in the audio devices, respectively. The primary node 112 is configured for the audio control device 110 to communicate with the audio devices 120 to 140. In an example, the main controller 111 sends, to the processing module 140 of the audio device 140 in sequence via the primary node 112, the secondary node 122, the secondary node 132, and the secondary node 142, audio data that needs to be played by the audio device 140. The processing module 141 controls playing of the audio data. In another example, audio data collected by the processing module 131 of the audio device 130 is sequentially transmitted to the main controller 111 by using the secondary node 132, the secondary node 122, and the primary node 112.

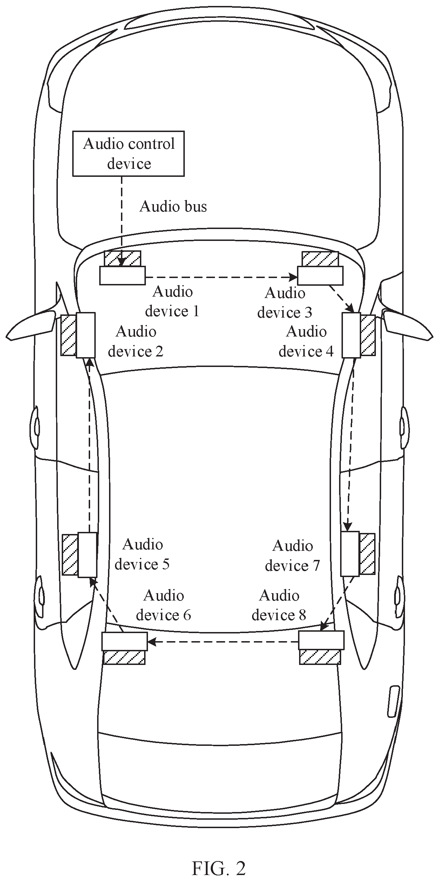

FIG. 2 is a diagram of distribution of an audio system in a vehicle according to an embodiment of this application. As shown in FIG. 2, an audio control device is connected to audio devices 1 to 8 in a daisy chain networking manner. The audio device 1 and the audio device 3, the audio device 3 and the audio device 4, the audio device 4 and the audio device 7, the audio device 7 and the audio device 8, the audio device 8 and the audio device 6, the audio device 6 and the audio device 5, and the audio device 5 and the audio device 2 may be separately connected through in-vehicle audio buses. The audio control device may include the audio control device 110 shown in FIG. 1, and the audio devices 1 to 8 may include one or more of the audio device 120, the audio device 130, and the audio device 140 shown in FIG. 1. For example, the audio device 1 may be the audio device 120 shown in FIG. 1, one or more of the audio device 3, the audio device 4, the audio device 7, and the audio device 8 may be the audio device 130 shown in FIG. 1, and one or more of the audio device 6, the audio device 5, and the audio device 2 may be the audio device 140 shown in FIG. 1.

For example, the audio devices 1 to 8 may include but are not limited to a head unit (head unit), a speaker, a microphone (microphone, MIC), and a power amplifier (audio power amplifier, APM).

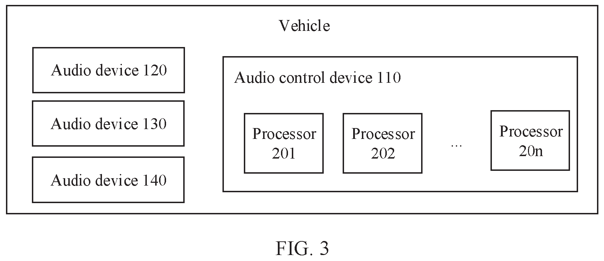

FIG. 3 is a functional diagram of a vehicle according to an embodiment of this application. As shown in FIG. 3, the vehicle includes the audio system 100 shown in FIG. 1. When the audio system 100 is disposed in the vehicle, the audio control device 110 may include any one of a vehicle domain controller (vehicle domain controller, VDC), an autonomous driving domain controller (advanced driving domain controller, ADC), and a cockpit domain controller (cockpit domain controller, CDC). Alternatively, the audio control device 110 may further include but is not limited to an in-car application-server (in-car application-server, ICAS) controller, a body domain controller (body domain controller, BDC), a special equipment system (special equipment system, SAS), a media graphics unit (media graphics unit, MGU), a body super core (body super core, BSC), and an advanced driving assistance system super core (advanced driving assistance system super core, ADAS super core). The ICAS may include at least one of the following: a vehicle control server ICAS 1, an intelligent driving server ICAS 2, an intelligent cockpit server ICAS 3, and an information entertainment server ICAS 4.

The main controller 111 and the primary node 112 each may include one or more processors in the audio control device 110 shown in FIG. 3, for example, processors 201 to 20n (n is a positive integer).

It should be understood that FIG. 1 to FIG. 3 are merely examples for description. In an actual implementation process, the audio system 100 may include more or fewer secondary nodes. In other words, the audio system may include more or fewer audio devices.

As described above, to implement transmission of audio data between an audio control device and an audio device, before data transmission, each audio device in a plurality of audio devices needs to be clock-synchronized with the audio control device, and is discovered to access an audio bus system.

In view of this, embodiments of this application provide a communication method, apparatus, and system, and a vehicle, to improve efficiency of clock synchronization between a plurality of secondary nodes and a primary node in a process in which the primary node discovers a secondary node, and accelerate a speed of discovering the secondary node by the primary node.

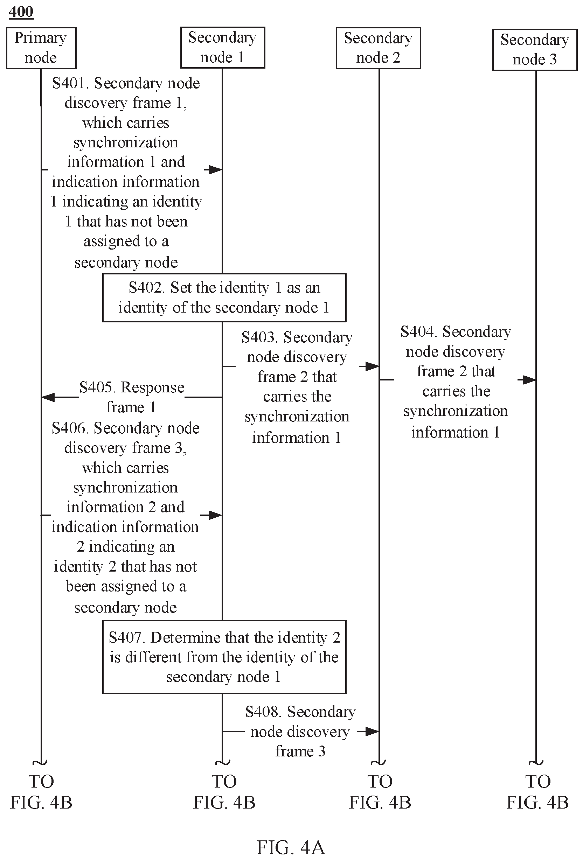

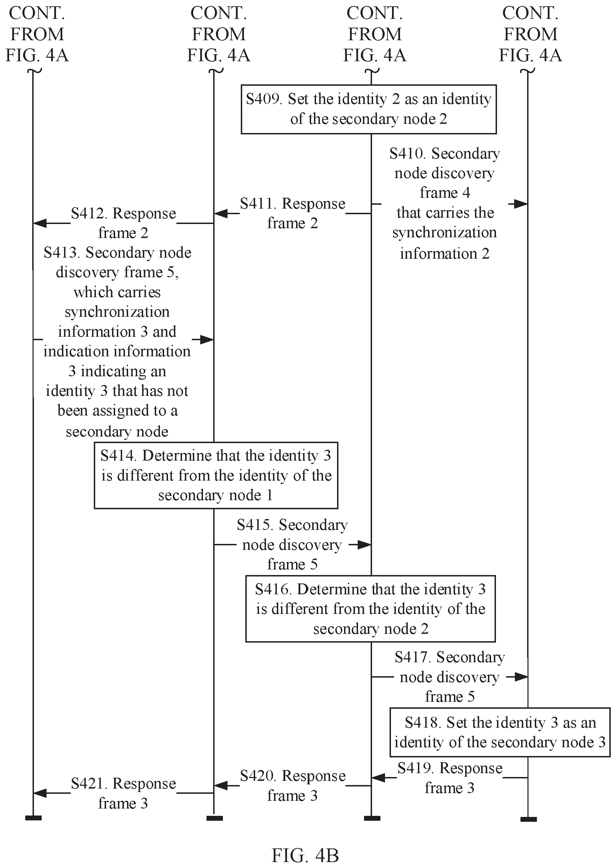

With reference to FIG. 4A and FIG. 4B, the following describes a specific procedure of the communication method provided in embodiments of this application.

FIG. 4A and FIG. 4B are a flowchart of a communication method according to an embodiment of this application. The method 400 may be performed by the audio system 100 shown in FIG. 1, or may be applied to the audio system shown in FIG. 2. For example, a primary node may be the primary node 112 in FIG. 1, and a secondary node 1 to a secondary node 3 may be the secondary node 120 to the secondary node 140 in FIG. 1, respectively. Specifically, the method 400 may include S401 to S421.

S401. The primary node sends a secondary node discovery frame 1 to the secondary node 1, where the secondary node discovery frame 1 carries synchronization information 1 and indication information 1 indicating an identity 1 that has not been assigned to a secondary node.

For example, the indication information 1 may include the identity 1, or the indication information 1 may include information indicating that the identity 1 is in an unassigned state.

S402. The secondary node 1 sets the identity 1 as an identity of the secondary node 1.

For example, the secondary node 1 is in an undiscovered state, and sets the identity 1 as the identity of the secondary node 1. When the identity 1 is configured for the secondary node 1, the identity 1 may uniquely identify the secondary node 1.

S403. The secondary node 1 sends, to the secondary node 2, a secondary node discovery frame 2 that carries the synchronization information 1.

In some possible implementations, the secondary node discovery frame 2 may carry only the synchronization information 1.

For example, the secondary node discovery frame 1 includes a synchronization domain and an information domain, where the synchronization domain carries the synchronization information 1, and the information domain carries the identity 1. In this case, the secondary node discovery frame 2 may carry only the synchronization domain of the secondary node 1.

In some possible implementations, the secondary node discovery frame 2 may carry the synchronization information 1 and indication information a. The indication information a indicates at least one of the following: The secondary node discovery frame 2 is not used to assign an identity to a secondary node, the secondary node discovery frame 2 is only for clock synchronization, and the secondary node discovery frame 2 does not carry an identity that is not assigned to a secondary node.

For example, the secondary node 1 obtains the indication information a based on the indication information 1.

For example, if the indication information 1 is the identity 1, the indication information a may be a special identity, and the special identity may be a specific value, for example, may be a specific value that cannot be assigned to the secondary node as the identity.

For another example, if the indication information 1 is state information 1 of the identity 1, and the state information 1 indicates that the identity 1 has not been assigned to the secondary node. The indication information a may be state information 2 of the identity 1, and the state information 2 indicates that the identity 1 is assigned to the secondary node.

For still another example, if the secondary node discovery frame 1 includes the synchronization domain and the information domain, and the indication information 1 is indication information indicating that the secondary node discovery frame carries the information domain, the indication information a may be indication information indicating that the secondary node discovery frame does not carry the information domain.

S404. The secondary node 2 sends, to the secondary node 3, the secondary node discovery frame 2 that carries the synchronization information 1.

For example, when determining that the secondary node discovery frame 2 does not carry the identity that is not assigned to the secondary node, or when determining that the secondary node discovery frame 2 is only for clock synchronization, the secondary node 2 sends the secondary node discovery frame 2 to the secondary node 3.

S405. The secondary node 1 sends a response frame 1 to the primary node.

For example, the response frame 1 indicates that the secondary node 1 has set the identity 1 as the identity of the secondary node 1, or the secondary node 1 has set the identity 1 as the identity of the secondary node 1 and has completed clock synchronization. The primary node receives the response frame 1, and completes discovery of the secondary node 1.

It should be noted that S405 may be performed synchronously with S403, may be performed after S403, or may be performed before S403.

It should further be noted that the secondary node 1 may be a secondary node directly connected to the primary node, or one or more secondary nodes may be sequentially connected between the secondary node 1 and the primary node. The secondary node 3 may be a tail secondary node, in other words, no secondary node is connected to a downlink of the secondary node 3. Alternatively, the secondary node 3 may be an intermediate secondary node, in other words, at least one secondary node is connected to a downlink of the secondary node 3. When the secondary node 3 is the intermediate secondary node, the secondary node 3 sends the secondary node discovery frame 2 to the secondary node on the downlink of the secondary node 3. In addition, one or more secondary nodes may be sequentially connected between the secondary node 1 and the secondary node 2, and one or more secondary nodes may also be sequentially connected between the secondary node 2 and the secondary node 3.

In an actual implementation process, the primary node may repeatedly send the secondary node discovery frame 1 until the response frame 1 is received. In addition, if the secondary node determines that the secondary node has not set the identity, and receives the secondary node discovery frame that carries the identity 1 and the synchronization information 1, the secondary node 1 may also repeatedly send, to the secondary node 2, the secondary node discovery frame that carries only the synchronization information 1. Alternatively, if the secondary node determines that the secondary node has not set the identity, and receives the secondary node discovery frame that carries the identity 1 and the synchronization information 1, the secondary node 1 may repeatedly send, to the secondary node 2, the secondary node discovery frame that carries the synchronization information 1 and the indication information a. When the secondary node 2 receives a plurality of secondary node discovery frames that carry only the synchronization information 1 or carry the synchronization information 1 and the indication information a, the secondary node 2 may also forward the plurality of secondary node discovery frames to the secondary node 3.

S406. The primary node sends a secondary node discovery frame 3 to the secondary node 1, where the secondary node discovery frame 3 carries synchronization information 2 and indication information 2 indicating an identity 2 that has not been assigned to a secondary node.

S407. The secondary node 1 determines that the identity 2 is different from the identity of the secondary node 1.

For example, if the secondary node 1 receives the secondary node discovery frame 3 and determines that the identity 2 is different from the identity of the secondary node 1, it is determined that the primary node discovers the secondary node 1, and a state of the secondary node 1 transitions from an undiscovered state to a discovered state.

S408. The secondary node 1 sends the secondary node discovery frame 3 to the secondary node 2.

S409. The secondary node 2 sets the identity 2 as an identity of the secondary node 2.

S410. The secondary node 2 sends, to the secondary node 3, a secondary node discovery frame 4 that carries the synchronization information 2.

A structure of the secondary node discovery frame 4 is the same as a structure of the secondary node discovery frame 2, and information content carried in the secondary node discovery frame 4 is similar to information content carried in the secondary node discovery frame 2. A method for obtaining and sending the secondary node discovery frame 4 by the secondary node 2 is the same as a method for obtaining and sending the secondary node discovery frame 2 by the secondary node 1. For specific content, refer to the descriptions in S403. Details are not described herein again.

S411. The secondary node 2 sends a response frame 2 to the secondary node 1.

Information indicated by the response frame 2 is similar to information indicated by the response frame 1. A method for sending the response frame 2 by the secondary node 2 is similar to a method for sending the response frame 1 by the secondary node 1. For specific content, refer to the descriptions in S405. Details are not described herein again.

S412. The secondary node 1 sends the response frame 2 to the primary node.

For example, after receiving the response frame 2, the primary node completes discovery of the secondary node 2.

S413. The primary node sends a secondary node discovery frame 5 to the secondary node 1, where the secondary node discovery frame 5 carries synchronization information 3 and indication information 3 indicating an identity 3 that has not been assigned to a secondary node.

S414. The secondary node 1 determines that the identity 3 is different from the identity of the secondary node 1.

S415. The secondary node 1 sends the secondary node discovery frame 5 to the secondary node 2.

S416. The secondary node 2 determines that the identity 3 is different from the identity of the secondary node 2.

For example, if the secondary node 2 receives the secondary node discovery frame 5 and determines that the identity 3 is different from the identity of the secondary node 2, it is determined that the primary node discovers the secondary node 2, and a state of the secondary node 2 transitions from an undiscovered state to a discovered state. S417. The secondary node 2 sends the secondary node discovery frame 5 to the secondary node 3.

S418. The secondary node 3 sets the identity 3 as an identity of the secondary node 3.

S419. The secondary node 3 sends a response frame 3 to the secondary node 2.

S420. The secondary node 2 sends the response frame 3 to the secondary node 1.

S421. The secondary node 1 sends the response frame 3 to the primary node.

For example, after receiving the response frame 3, the primary node completes discovery of the secondary node 3.

For a more detailed execution method of S413 to S421, refer to the descriptions of S401 to S412. Details are not described herein again.

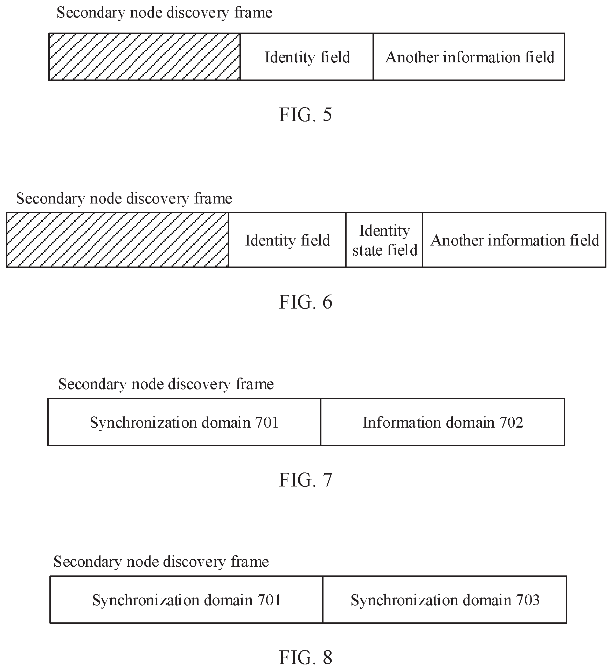

In this embodiment of this application, the secondary node discovery frame 1 (the secondary node discovery frame 3 or the secondary node discovery frame 5) and the secondary node discovery frame 2 (or the secondary node discovery frame 4) may include a plurality of forms. The following describes a structure of the secondary node discovery frame in this application with reference to FIG. 5 through FIG. 10A to FIG. 10C. For example, the identity carried in the secondary node discovery frame may be represented by using a character string. The following uses an example in which an identity is a 6-bit binary string for description. For example, the identity 1 to the identity 3 are respectively 000001, 000010 and 000011. In addition, the following uses the secondary node discovery frame 1 and the secondary node discovery frame 2 as an example to describe a frame structure of the secondary node discovery frame. It should be understood that frame structures of the secondary node discovery frame 3, the secondary node discovery frame 5, and the secondary node discovery frame 1 are the same, with a difference lying in carried identities. Frame structures of the secondary node discovery frame 4 and the secondary node discovery frame 2 are the same. In some implementations, information content carried in the secondary node discovery frame 4 and the secondary node discovery frame 2 is also the same.

In some possible implementations, as shown in FIG. 5, the secondary node discovery frame 1 may include an identity field, and the identity field may carry the identity 1, namely, "000001". In addition, a shadow part shown in FIG. 5 may carry the synchronization information 1. As described above, the indication information 1 may be the identity 1, and the indication information a may be a special identity, for example, a preset character string "111111". In this case, the structure of the secondary node discovery frame 2 may also be shown in FIG. 5. A difference between the secondary node discovery frame 1 and the secondary node discovery frame 2 lies in that an identity field of the secondary node discovery frame 2 carries the preset character string "111111".

In some possible implementations, 1 bit may be used as state information to indicate a state of an identity carried in an identity field, in other words, whether the identity is assigned to a secondary node. For example, when a value of 1-bit state information is "0", it indicates that the identity is not assigned; or when the value of the 1-bit state information is "1", it indicates that the identity is assigned. For example, as shown in FIG. 6, the secondary node discovery frame 1 may include an identity field and an identity state field. The identity field may carry the identity 1, namely, "000001". The identity state field may carry the state information 1 indicating that the identity 1 is not assigned to the secondary node, namely, "0". In addition, a shadow part shown in FIG. 6 may carry the synchronization information 1. As described above, the indication information 1 may be the state information 1, and the indication information a may be the state information 2, in other words, the indication identity 1 is assigned to "1" of the secondary node. In this case, the structure of the secondary node discovery frame 2 may also be shown in FIG. 6. A difference between the secondary node discovery frame 1 and the secondary node discovery frame 2 lies in that an identity state field of the secondary node discovery frame 2 carries the state information "1".

For example, the secondary node discovery frame 1 may further include check information 1, and the check information 1 is used to check the identity field. When the secondary node discovery frame 1 includes the identity state field, the check information 1 may be further used to check the identity state field. For example, the identity field shown in FIG. 5 or FIG. 6 may carry the check information 1.

For example, as shown in FIG. 5 and FIG. 6, the secondary node discovery frame may further carry another information field, and the another information field carries information other than the synchronization information and the identity, for example, control information. The control information may include information indicating a time interval at which a secondary node sends a response frame.

In some possible implementations, as shown in FIG. 7, the secondary node discovery frame 1 may include a synchronization domain 701 and an information domain 702, where the synchronization domain 701 carries the synchronization information 1, and the information domain 702 carries the identity 1. In this case, the secondary node discovery frame 2 may include only the synchronization domain 701, and the synchronization domain carries the synchronization information 1. Alternatively, the secondary node discovery frame 2 may include the synchronization domain 701 and a synchronization domain 703, and information content carried in the synchronization domain 701 is the same as information content carried in the synchronization domain 703. For example, both the synchronization domain 701 and the synchronization domain 703 carry the synchronization information 1. A bit length of the synchronization domain 703 may be the same as a bit length of the information domain 702, to be specific, the secondary node 1 overwrites the information domain with the synchronization domain in the secondary node discovery frame 1 to obtain the secondary node discovery frame 2 shown in FIG. 8. Alternatively, the secondary node discovery frame 2 may include the synchronization domain 701 and the information domain 702, where the synchronization domain 701 carries the synchronization information 1, and the information domain 702 carries a special identity, for example, the specific character string "111111".

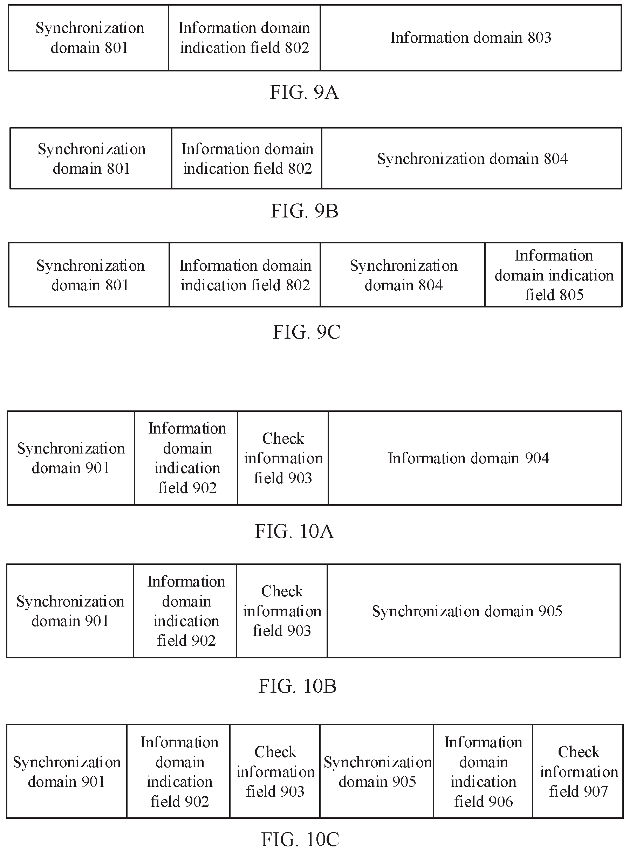

In some possible implementations, the secondary node discovery frame 1 may further include an information domain indication field. As shown in FIG. 9A, the secondary node discovery frame 1 may include a synchronization domain 801, an information domain indication field 802, and an information domain 803. The information domain indication field 802 carries indication information b, and the indication information b indicates that the secondary node discovery frame 1 further carries the information domain 803. In this case, the secondary node discovery frame 2 may include only the synchronization domain 801 and the information domain indication field 802. The information domain indication field 802 carries indication information c, and the indication information c indicates that the secondary node discovery frame 2 does not carry the information domain 803. Alternatively, as shown in FIG. 9B, the secondary node discovery frame 2 may include the synchronization domain 801, the information domain indication field 802, and a synchronization domain 804. The information domain indication field carries the indication information c. Information content carried in the synchronization domain 801 is the same as information content carried in the synchronization domain 804. For example, both the synchronization domain 801 and the synchronization domain 804 carry the synchronization information 1. A bit length of the synchronization domain 804 may be the same as a bit length of the information domain 803. Alternatively, as shown in FIG. 9C, the secondary node discovery frame 2 may include the synchronization domain 801, the information domain indication field 802, the synchronization domain 804, and an information domain indication field 805. Both the information domain indication field 802 and the information domain indication field 805 carry the indication information c, and both the synchronization domain 801 and the synchronization domain 804 carry the synchronization information 1. A sum of the bit length of the synchronization domain 804 and a bit length of the information domain indication field 805 may be the same as the bit length of the information domain 803. For example, the indication information b may be considered as an example of the indication information 1, and the indication information c may be considered as an example of the indication information a.

In some possible implementations, the secondary node discovery frame 1 may further include a check information field. As shown in FIG. 10A, the secondary node discovery frame 1 may include a synchronization domain 901, an information domain indication field 902, a check information field 903, and an information domain 904. The check information field 903 carries check information for checking the information domain indication field 902. In this case, the secondary node discovery frame 2 may include only the synchronization domain 901, the information domain indication field 902, and the check information field 903. Alternatively, as shown in FIG. 10B, the secondary node discovery frame 2 may include the synchronization domain 901, the information domain indication field 902, the check information field 903, and a synchronization domain 905. Information content carried in the synchronization domain 901 is the same as information content carried in the synchronization domain 905. For example, both the synchronization domain 901 and the synchronization domain 905 carry the synchronization information 1. A bit length of the synchronization domain 905 may be the same as a bit length of the information domain 904. Alternatively, as shown in FIG. 10C, the secondary node discovery frame 2 may include the synchronization domain 901, the information domain indication field 902, the check information field 903, the synchronization domain 905, an information domain indication field 906, and a check information field 907. Information content carried in the information domain indication field 902 is the same as information content carried in the information domain indication field 906, and information content carried in the check information field 903 is the same as information content carried in the check information field 907. Both the synchronization domain 901 and the synchronization domain 905 carry the synchronization information 1. A sum of bit lengths of the three fields: the synchronization domain 905, the information domain indication field 906, and the check information field 907 may be the same as the bit length of the information domain 904.

For example, when a length of the secondary node discovery frame 2 is different from a length of the secondary node discovery frame 1, such as when the secondary node discovery frame 2 includes only one synchronization domain and does not include an information domain, a preset sequence may be used to pad the length of the secondary node discovery frame 2 so that the length is the same as the length of the secondary node discovery frame.

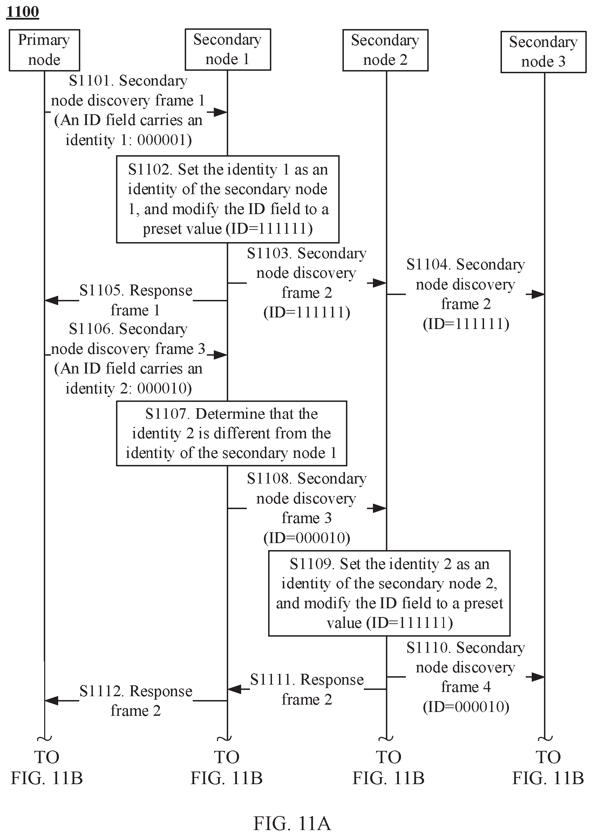

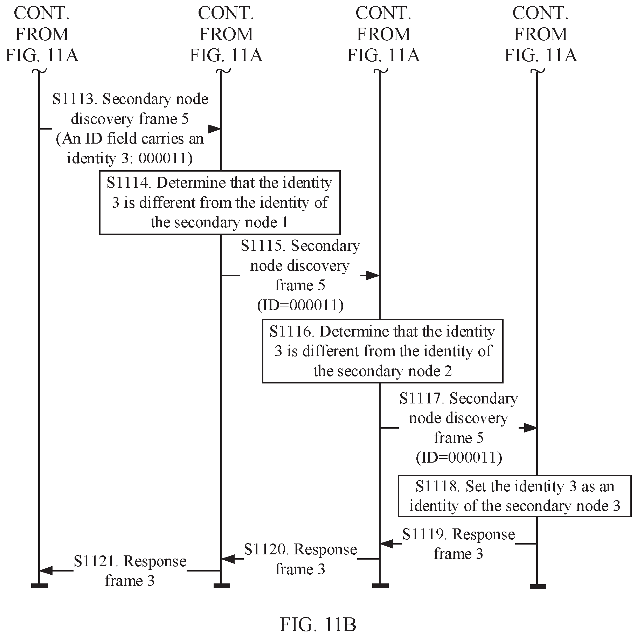

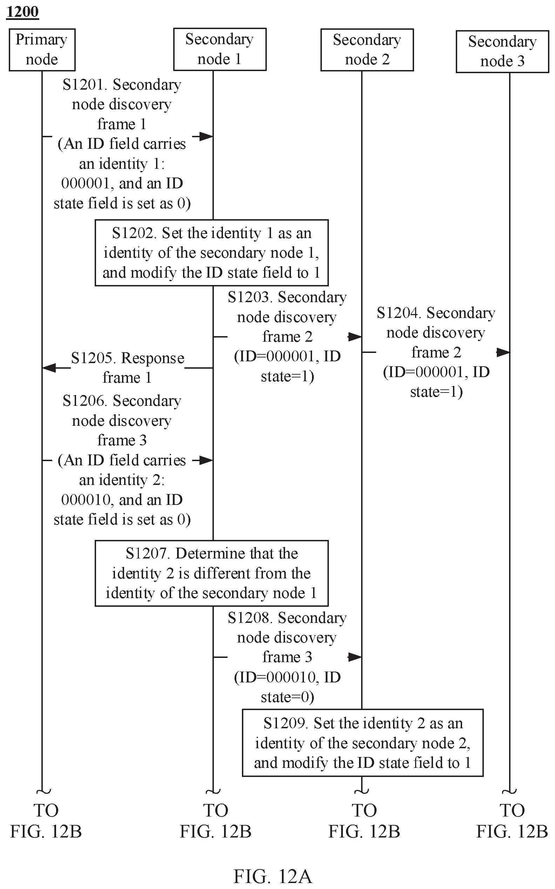

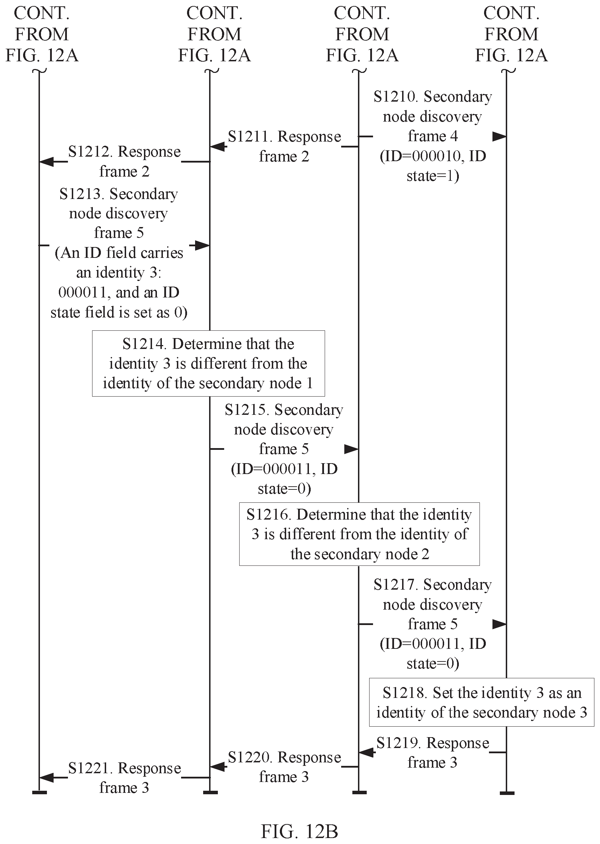

For example, a form of the secondary node discovery frame 1 (the secondary node discovery frame 3 or the secondary node discovery frame 5) and the secondary node discovery frame 2 (or the secondary node discovery frame 4) is shown in FIG. 5. A communication procedure between the primary node and the secondary nodes 1 to 3 may be shown in FIG. 11A and FIG. 11B. For example, a form of the secondary node discovery frame 1 (the secondary node discovery frame 3 or the secondary node discovery frame 5) and the secondary node discovery frame 2 (or the secondary node discovery frame 4) is shown in FIG. 6. A communication procedure between the primary node and the secondary nodes 1 to 3 may be shown in FIG. 12A and FIG. 12B. For more detailed implementation of the method 1100 shown in FIG. 11A and FIG. 11B and the method 1200 shown in FIG. 12A and FIG. 12B, refer to the descriptions in the foregoing embodiment. Details are not described herein again.

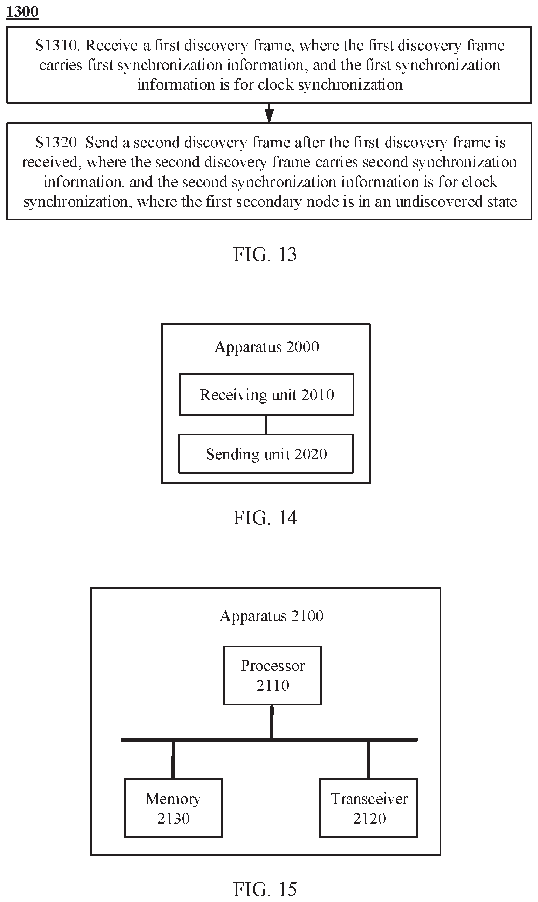

FIG. 13 is another flowchart of a communication method according to an embodiment of this application. The method 1300 may be performed by the audio system 100 shown in FIG. 1, or may be applied to the audio system shown in FIG. 2. For example, the method may be performed by a first secondary node. The method 1300 includes the following steps.

S1310. Receive a first discovery frame, where the first discovery frame carries first synchronization information, and the first synchronization information is for clock synchronization.

For example, the first secondary node may be a secondary node directly connected to a primary node, or the first secondary node may be any secondary node other than a tail secondary node in daisy chain networking including a primary node and a plurality of secondary nodes. For example, the first secondary node may be the secondary node 1 or the secondary node 2 in the foregoing embodiment. When the secondary node 3 is not the tail secondary node in the foregoing embodiment, the first secondary node may also be the secondary node 3.

That the first discovery frame is received may include: receiving the first discovery frame from the primary node, or receiving the first discovery frame sent by the primary node via one or more secondary nodes.

S1320. Send a second discovery frame after the first discovery frame is received, where the second discovery frame carries second synchronization information, and the second synchronization information is for clock synchronization.

For example, that the second discovery frame is sent may include: sending the second discovery frame to a second secondary node. The second secondary node may be a secondary node located on a downlink of the first secondary node. In some implementations, the second secondary node may also be the tail secondary node.

For example, when the first secondary node is the secondary node 1, the first discovery frame may include the foregoing secondary node discovery frame 1, the first synchronization information may include the foregoing synchronization information 1, the second discovery frame may include the foregoing secondary node discovery frame 2, and the second synchronization information may include the foregoing synchronization information 1. When the first secondary node is the secondary node 2, the first discovery frame may include the foregoing secondary node discovery frame 3, the first synchronization information may include the foregoing synchronization information 2, the second discovery frame may include the foregoing secondary node discovery frame 4, and the second synchronization information may include the foregoing synchronization information 2.

In some possible implementations, the first discovery frame and the second discovery frame further carry a first identity field. A value of the first identity field of the first discovery frame is a non-specific value, and a value of the first identity field of the second discovery frame is a specific value.

For example, the first identity field may include the foregoing identity field, the non-specific value may include the foregoing identity 1, the identity 2, and the identity 3, and the specific value may include the foregoing special identity, for example, the preset character string "111111".

In some possible implementations, the method further includes: setting the non-specific value as a node identity of the first secondary node; and sending a first response frame.

For example, when the first secondary node is the foregoing secondary node 1, the non-specific value may include "000001", and the first secondary node sets "000001" as the node identity, namely, an identity of the first secondary node. The first response frame may include the foregoing response frame 1. When the first secondary node is the foregoing secondary node 2, the non-specific value may include "000010", and the first secondary node sets "000010" as the identity of the first secondary node. The first response frame may include the foregoing response frame 2. When the first secondary node is the foregoing secondary node 3, the non-specific value may include "000011", and the first secondary node sets "000011" as the identity of the first secondary node. The first response frame may include the foregoing response frame 3.

In some possible implementations, the method further includes: receiving a third discovery frame, where the third discovery frame carries a second identity field, and a value of the second identity field is a specific value; and sending the third discovery frame.

For example, the second identity field and the first identity field may be a same field. For example, the second identity field may include the foregoing identity field.

In this implementation, the first secondary node may be a secondary node other than the tail secondary node and other than a secondary node directly connected to the primary node. For example, if the first secondary node may be the secondary node 2, the third discovery frame may be the foregoing secondary node discovery frame 2. For another example, when the secondary node 3 is not the tail node, the first secondary node may also be the secondary node 3, and the third discovery frame may be the foregoing secondary node discovery frame 2, or may be the foregoing secondary node discovery frame 4.

In some possible implementations, the first discovery frame and the second discovery frame further carry a state field, and the state field indicates whether a first identity carried in the first identity field is assigned; and when a value of the state field is a first value, the state field indicates that the first identity is not assigned; or when a value of the state field is a second value, the state field indicates that the first identity is assigned. The value of the state field of the first discovery frame is the first value, and the value of the state field of the second discovery frame is the second value.

For example, the state field may include the foregoing identity state field, the first value may include the foregoing "0", and the second value may include the foregoing "1". When the first discovery frame is the secondary node discovery frame 1, the first identity may be the foregoing identity 1; when the first discovery frame is the secondary node discovery frame 3, the first identity may be the foregoing identity 2; or when the first discovery frame is the secondary node discovery frame 5, the first identity may be the foregoing identity 3.

In some possible implementations, the method further includes: setting a value of the first identity field as a node identity of the first secondary node; and sending a second response frame.

For example, when the first secondary node is the foregoing secondary node 1, the value of the first identity field may be "000001", and the first secondary node sets "000001" as the identity of the first secondary node. The second response frame may include the foregoing response frame 1. When the first secondary node is the foregoing secondary node 2, the value of the first identity field may be "000010", and the first secondary node sets "000010" as the identity of the first secondary node. The second response frame may include the foregoing response frame 2. When the first secondary node is the foregoing secondary node 3, the value of the first identity field may be "000011", and the first secondary node sets "000011" as the identity of the first secondary node. The second response frame may include the foregoing response frame 3.

In some possible implementations, the first discovery frame and the second discovery frame further carry a first check field, and the first check field is at least used to check the first identity field and the state field.

For example, the first check field may include the foregoing check information 1, to check the first identity field and the state field.

In some possible implementations, the first discovery frame and the second discovery frame further carry a second check field, and the second check field is at least used to check the first identity field.

For example, the second check field may include the foregoing check information 1, to check the first identity field.

In some possible implementations, the method further includes: receiving a fourth discovery frame, where the fourth discovery frame carries the first identity field and the state field, and the value of the state field is the second value; and sending the fourth discovery frame.

In this implementation, the first secondary node may be a secondary node other than the tail secondary node and other than a secondary node directly connected to the primary node. For example, if the first secondary node may be the secondary node 2, the fourth discovery frame may be the foregoing secondary node discovery frame 2. For another example, when the secondary node 3 is not the tail node, the first secondary node may also be the secondary node 3, and the fourth discovery frame may be the foregoing secondary node discovery frame 2, or may be the foregoing secondary node discovery frame 4.

In some possible implementations, the first discovery frame carries an information field, the information field includes a third identity field, and the method further includes: setting a value of the third identity field as the node identity of the first secondary node; and sending a third response frame.

For example, the third identity field may include the foregoing identity field. The third identity field, the first identity field, and the second identity field may be a same field.

For example, the information field may include any one of the foregoing information domain 702, the information domain 803, and the information domain 904.

For example, when the first secondary node is the foregoing secondary node 1, the value of the third identity field may be "000001", and the first secondary node sets "000001" as the identity of the first secondary node. The third response frame may include the foregoing response frame 1. When the first secondary node is the foregoing secondary node 2, the value of the third identity field may be "000010", and the first secondary node sets "000010" as the identity of the first secondary node. The third response frame may include the foregoing response frame 2. When the first secondary node is the foregoing secondary node 3, the value of the third identity field may be "000011", and the first secondary node sets "000011" as the identity of the first secondary node. The third response frame may include the foregoing response frame 3.

In some possible implementations, the second discovery frame carries only the second synchronization information, and a bit length of the second synchronization information is the same as a bit length of the first synchronization information; or the second discovery frame carries the second synchronization information and third synchronization information, a bit length of the second synchronization information is the same as a bit length of the first synchronization information, and a bit length of the third synchronization information is the same as a bit length of the information field.

For example, information content carried in the third synchronization information may be the same as information content carried in the first synchronization information. For example, the first synchronization information may include all information in the foregoing synchronization domain 701 (the synchronization domain 801 or the synchronization domain 901), and the third synchronization information may include all information in the foregoing synchronization domain 703 (the synchronization domain 804 or the synchronization domain 905). For another example, the first synchronization information may include all information in the foregoing synchronization domain 801 and the information domain indication field 802 (or the synchronization domain 901, the information domain indication field 902, and the check information field 903), and the third synchronization information may include all information in the foregoing synchronization domain 804 and the information domain indication field 805 (or the synchronization domain 905, the information domain indication field 906, and the check information field 907). Alternatively, information content carried in the third synchronization information may be different from information content carried in the first synchronization information. For example, the first synchronization information includes all information in the synchronization domain 801 and the information domain indication field 802, and the third synchronization information may include only all information in the synchronization domain 804. For another example, the first synchronization information includes all information in the synchronization domain 901, the information domain indication field 902, and the check information field 903, and the third synchronization information may include only all information in the synchronization domain 905.

In some possible implementations, the first synchronization information and the second synchronization information include an information indication field, and the information indication field indicates whether the first synchronization information or the second synchronization information carries the information field; and when a value of the information indication field is a third value, the information indication field indicates that the information field is carried; or when a value of the information indication field is a fourth value, the information indication field indicates that the information field is not carried. The value of the information indication field in the first discovery frame is the third value, and the value of the information indication field in the second discovery frame is the fourth value.

For example, the information indication field may include any one of the foregoing information domain indication field 802 or the information domain indication field 902.

In some possible implementations, the first synchronization information and the second synchronization information further include a third check field, and the third check field is at least used to check the information indication field.

For example, the third check field may include the check information field 903.

In some possible implementations, the method further includes: receiving a fifth discovery frame, where the fifth discovery frame carries at least synchronization information, and the synchronization information is for clock synchronization; and sending the fifth discovery frame.

In this implementation, the first secondary node may be a secondary node other than the tail secondary node and other than a secondary node directly connected to the primary node. For example, if the first secondary node may be the secondary node 2, the fifth discovery frame may be the secondary node discovery frame 2. For another example, when the secondary node 3 is not the tail node, the first secondary node may also be the secondary node 3, and the fifth discovery frame may be the foregoing secondary node discovery frame 2, or may be the foregoing secondary node discovery frame 4.

In some possible implementations, the fifth discovery frame is the same as the second discovery frame.

In some possible implementations, the second synchronization information is the same as the first synchronization information.

That the second synchronization information is the same as the first synchronization information includes: information content carried in the second synchronization information is the same as information content carried in the first synchronization information.

For example, both the first synchronization information and the second synchronization information may include all information in the foregoing synchronization domain 701 (the synchronization domain 801 or the synchronization domain 901). For another example, both the first synchronization information and the second synchronization information may include all information in the foregoing synchronization domain 801 and the information domain indication field 802 (or the synchronization domain 901, the information domain indication field 902, and the check information field 903).

According to the communication method provided in this embodiment of this application, in a process of discovering a secondary node by a primary node, a clock synchronization process is synchronously performed, to help shorten duration required for clock synchronization, improve efficiency of performing clock synchronization between the primary node and a plurality of secondary nodes, and accelerate a speed of discovering the secondary node by the primary node.

In various embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

The foregoing describes in detail the communication methods provided in embodiments of this application with reference to FIG. 1 to FIG. 13. The following describes in detail communication apparatuses provided in embodiments of this application with reference to FIG. 14 and FIG. 15. It should be understood that descriptions of control apparatus embodiments correspond to the descriptions of the method embodiments. Therefore, for content that is not described in detail, refer to the foregoing method embodiments. For brevity, details are not described herein again.

FIG. 14 is a block diagram of a communication apparatus 2000 according to an embodiment of this application. The apparatus 2000 may include units configured to perform the methods in FIG. 4A and FIG. 4B, and FIG. 11A and FIG. 11B to FIG. 13. In addition, the units in the apparatus 2000 are separately configured to implement corresponding procedures of the method embodiments in FIG. 4A and FIG. 4B, and FIG. 11A and FIG. 11B to FIG. 13.

Specifically, the apparatus 2000 includes a receiving unit 2010 and a sending unit 2020. The receiving unit 2010 is configured to receive a first discovery frame, where the first discovery frame carries first synchronization information, and the first synchronization information is for clock synchronization. The sending unit 2020 is configured to send a second discovery frame after the receiving unit receives the first discovery frame, where the second discovery frame carries second synchronization information, and the second synchronization information is for clock synchronization. The first secondary node is in an undiscovered state.

In some possible implementations, the first discovery frame and the second discovery frame further carry a first identity field.

In some possible implementations, a value of the first identity field of the first discovery frame is a non-specific value, and a value of the first identity field of the second discovery frame is a specific value.

In some possible implementations, the apparatus 2000 further includes a first processing unit, configured to set the non-specific value as a node identity of the first secondary node; and the sending unit 2020 is further configured to send a first response frame.

In some possible implementations, the receiving unit 2020 is further configured to receive a third discovery frame, where the third discovery frame carries a second identity field, and a value of the second identity field is a specific value; and the sending unit 2020 is further configured to send the third discovery frame.

In some possible implementations, the first discovery frame and the second discovery frame further carry a state field, and the state field indicates whether a first identity carried in the first identity field is assigned; and when a value of the state field is a first value, the state field indicates that the first identity is not assigned; or when a value of the state field is a second value, the state field indicates that the first identity is assigned.

In some possible implementations, the value of the state field of the first discovery frame is the first value, and the value of the state field of the second discovery frame is the second value.

In some possible implementations, the apparatus 2000 further includes a second processing unit, configured to set a value of the first identity field as a node identity of the first secondary node; and the sending unit 2020 is further configured to send a second response frame.

In some possible implementations, the first discovery frame and the second discovery frame further carry a first check field, and the first check field is at least used to check the first identity field and the state field.

In some possible implementations, the first discovery frame and the second discovery frame further carry a second check field, and the second check field is at least used to check the first identity field.

In some possible implementations, the receiving unit 2010 is further configured to receive a fourth discovery frame, where the fourth discovery frame carries the first identity field and the state field, and the value of the state field is the second value; and the sending unit 2020 is further configured to send the fourth discovery frame.

In some possible implementations, the first discovery frame carries an information field, and the information field includes a third identity field. The apparatus 2000 further includes a third processing unit, configured to set a value of the third identity field as the node identity of the first secondary node. The sending unit 2020 is configured to send a third response frame.

In some possible implementations, the second discovery frame carries only the second synchronization information, and a bit length of the second synchronization information is the same as a bit length of the first synchronization information; or the second discovery frame carries the second synchronization information and third synchronization information, a bit length of the second synchronization information is the same as a bit length of the first synchronization information, and a bit length of the third synchronization information is the same as a bit length of the information field.

In some possible implementations, the first synchronization information and the second synchronization information include an information indication field, and the information indication field indicates whether the first synchronization information or the second synchronization information carries the information field; and when a value of the information indication field is a third value, the information indication field indicates that the information field is carried; or when a value of the information indication field is a fourth value, the information indication field indicates that the information field is not carried.

In some possible implementations, the value of the information indication field in the first discovery frame is the third value, and the value of the information indication field in the second discovery frame is the fourth value.

In some possible implementations, the first synchronization information and the second synchronization information further include a third check field, and the third check field is at least used to check the information indication field.

In some possible implementations, the receiving unit 2010 is further configured to receive a fifth discovery frame, where the fifth discovery frame carries at least synchronization information, and the synchronization information is for clock synchronization; and the sending unit 2020 is further configured to send the fifth discovery frame.

In some possible implementations, the fifth discovery frame is the same as the second discovery frame.

In some possible implementations, the second synchronization information is the same as the first synchronization information.

For example, the apparatus 2000 may be disposed in the secondary node 122 or the secondary node 132 shown in FIG. 1. When the secondary node 142 is not a tail secondary node, the apparatus 2000 may also be disposed in the secondary node 142. Alternatively, the apparatus 2000 may be disposed in any one of the audio devices 120 to 140 shown in FIG. 3. Operations performed by the receiving unit 2010 and the sending unit 2020 may be performed by one processor, or may be performed by different processors. In a specific implementation process, the one or more processors may be disposed in the audio device; or the apparatus 2000 may be a chip disposed in the audio device.

In this application, the processor is a circuit having a signal processing capability. In an implementation, the processor may be a circuit having an instruction fetching and execution capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or may be reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration file to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

In a specific implementation process, all or some of the units in the foregoing apparatus may be integrated together, or may be implemented independently. In an implementation, the units are integrated and implemented in a form of a system-on-a-chip (system-on-a-chip, SoC).

FIG. 15 is a block diagram of a communication apparatus according to an embodiment of this application. The communication apparatus 2100 shown in FIG. 15 may include a processor 2110, a transceiver 2120, and a memory 2130. The processor 2110, the transceiver 2120, and the memory 2130 are connected through an internal connection path. The memory 2130 is configured to store instructions. The processor 2110 is configured to execute the instructions stored in the memory 2130, to implement the methods in the foregoing embodiments. Optionally, the memory 2130 may be coupled to the processor 2110 through an interface, or may be integrated with the processor 2110.

It should be noted that the transceiver 2120 may include but is not limited to a transceiver apparatus such as an input/output interface (input/output interface), to implement communication between the apparatus 2100 and another device or a communication network.

The memory 2130 may be a read-only memory (read-only memory, ROM), a static storage device, a dynamic storage device, or a random access memory (random access memory, RAM).

The transceiver 2120 uses, for example, but is not limited to, a transceiver apparatus of a transceiver type, to implement communication between the apparatus 2100 and another device or a communication network, to receive/send data/information used to implement the methods in the foregoing embodiments.

Embodiments of this application further provide a communication system. The communication system includes an apparatus 2000 or an apparatus 2100, a primary node, and one or more other secondary nodes.

Embodiments of this application further provide a vehicle. The vehicle includes the foregoing apparatus 2000 or the apparatus 2100, or the vehicle further includes the foregoing communication system.

The vehicle in this application may include a road transportation means, a water transportation means, an air transportation means, an industrial device, an agricultural device, an entertainment device, or the like. The vehicle may be a vehicle in a broad sense, and may be a means of transportation (for example, a commercial vehicle, a passenger vehicle, a motorcycle, an airborne vehicle, or a train), an industrial vehicle (for example, a forklift, a trailer, or a tractor), an engineering vehicle (for example, an excavator, a bulldozer, or a crane), an agricultural device (for example, a lawn mower or a harvester), an entertainment device, a toy vehicle, or the like. A type of the vehicle is not specifically limited in embodiments of this application.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip. The chip includes a circuit, configured to perform the methods in the foregoing embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In descriptions of embodiments of this application, unless otherwise specified, "/" means "or". For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, at least one means one or more, and a plurality of means two or more. In addition, "at least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Prefix words "first", "second", and the like in embodiments of this application are merely intended to distinguish between different objects, and impose no limitation on positions, sequences, priorities, quantities, content, or the like of the described objects. In embodiments of this application, use of the prefix words, for example, ordinal numbers, used to distinguish between the described objects does not constitute a limitation on the described objects. For descriptions of the described objects, refer to the descriptions of the context in the claims or embodiments. The use of such prefix words should not constitute a redundant limitation.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

In various embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first secondary node, wherein the method comprises:
receiving a first discovery frame, wherein the first discovery frame carries first synchronization information, and the first synchronization information is for clock synchronization; and
sending a second discovery frame after the first discovery frame is received, wherein the second discovery frame carries second synchronization information, and the second synchronization information is for clock synchronization, wherein
the first secondary node is in an undiscovered state.

2. The method according to claim 1, wherein the first discovery frame and the second discovery frame further carry a first identity field.

3. The method according to claim 2, wherein a value of the first identity field of the first discovery frame is a non-specific value, and a value of the first identity field of the second discovery frame is a specific value.

4. The method according to claim 3, wherein the method further comprises:
setting the non-specific value as a node identity of the first secondary node; and
sending a first response frame.

5. The method according to claim 3 or 4, wherein the method further comprises:
receiving a third discovery frame, wherein the third discovery frame carries a second identity field, and a value of the second identity field is a specific value; and
sending the third discovery frame.

6. The method according to claim 2, wherein the first discovery frame and the second discovery frame further carry a state field, and the state field indicates whether a first identity carried in the first identity field is assigned; and
when a value of the state field is a first value, the state field indicates that the first identity is not assigned; or
when a value of the state field is a second value, the state field indicates that the first identity is assigned.

7. The method according to claim 6, wherein the value of the state field of the first discovery frame is the first value, and the value of the state field of the second discovery frame is the second value.

8. The method according to claim 7, wherein the method further comprises:
setting a value of the first identity field as a node identity of the first secondary node; and
sending a second response frame.

9. The method according to any one of claims 6 to 8, wherein the first discovery frame and the second discovery frame further carry a first check field, and the first check field is at least used to check the first identity field and the state field.

10. The method according to any one of claims 2 to 8, wherein the first discovery frame and the second discovery frame further carry a second check field, and the second check field is at least used to check the first identity field.

11. The method according to any one of claims 6 to 9, wherein the method further comprises:
receiving a fourth discovery frame, wherein the fourth discovery frame carries the first identity field and the state field, and the value of the state field is the second value; and
sending the fourth discovery frame.

12. The method according to claim 1, wherein the first discovery frame carries an information field, the information field comprises a third identity field, and the method further comprises:
setting a value of the third identity field as a node identity of the first secondary node; and
sending a third response frame.

13. The method according to claim 12, wherein the second discovery frame carries only the second synchronization information, and a bit length of the second synchronization information is the same as a bit length of the first synchronization information; or
the second discovery frame carries the second synchronization information and third synchronization information, a bit length of the second synchronization information is the same as a bit length of the first synchronization information, and a bit length of the third synchronization information is the same as a bit length of the information field.

14. The method according to claim 12, wherein the first synchronization information and the second synchronization information comprise an information indication field, and the information indication field indicates whether the first synchronization information or the second synchronization information carries the information field; and
when a value of the information indication field is a third value, the information indication field indicates that the information field is carried; or
when a value of the information indication field is a fourth value, the information indication field indicates that the information field is not carried.

15. The method according to claim 14, wherein the value of the information indication field in the first discovery frame is the third value, and the value of the information indication field in the second discovery frame is the fourth value.

16. The method according to claim 14 or 15, wherein the first synchronization information and the second synchronization information further comprise a third check field, and the third check field is at least used to check the information indication field.

17. The method according to any one of claims 12 to 16, wherein the method further comprises:
receiving a fifth discovery frame, wherein the fifth discovery frame carries at least synchronization information, and the synchronization information is for clock synchronization; and
sending the fifth discovery frame.

18. The method according to claim 17, wherein the fifth discovery frame is the same as the second discovery frame.

19. The method according to any one of claims 1 to 18, wherein the second synchronization information is the same as the first synchronization information.

20. A communication apparatus, used in a first secondary node, wherein the apparatus comprises a receiving unit and a sending unit, and is configured to perform the method according to any one of claims 1 to 19.

21. A communication apparatus, comprising:
a memory, configured to store a computer program; and
a processor, configured to execute the computer program stored in the memory, so that the control apparatus performs the method according to any one of claims 1 to 19.

22. A communication system, comprising the apparatus according to claim 20 or 21, a primary node, and a second secondary node.

23. A vehicle, comprising the apparatus according to claim 20 or 21, or comprising the system according to claim 22.

24. A computer-readable storage medium, wherein the computer-readable storage medium stores instructions, and when the instructions are executed by a processor, the processor is enabled to implement the method according to any one of claims 1 to 19.

25. A chip, wherein the chip comprises a circuit, and the circuit is configured to perform the method according to any one of claims 1 to 19.
